# EUROPÄISCHE PATENTSCHRIFT

(11) **EP 0 773 877 B1**
(45) Veröffentlichungstag und Bekanntmachung des Hinweises auf die Patenterteilung: **07.04.1999**
(21) Anmeldenummer: 95928463.9
(22) Anmeldetag: 26.07.1995
(51) Int. Cl.: B60T 8/50, B60T 8/36, G05D 7/06, F16K 31/06

(54) **VENTILVORRICHTUNG, INSBESONDERE FÜR HYDRAULISCHE BREMSANLAGEN MIT BLOCKIER- UND/ODER ANTRIEBSSCHLUPFREGELUNG, UND VERFAHREN ZUR EINSTELLUNG EINER VENTILVORRICHTUNG**
VALVE DEVICE, IN PARTICULAR FOR HYDRAULIC BRAKE SYSTEMS WITH ABS OR DRIVE-SLIP CONTROL, AND A METHOD OF ADJUSTING A VALVE DEVICE
DISPOSITIF A SOUPAPE, NOTAMMENT POUR DES SYSTEMES DE FREINS HYDRAULIQUES EQUIPES D'ANTIBLOCAGE OU ET/OU D'ANTIPATINAGE, ET PROCEDE DE REGLAGE D'UN DISPOSITIF A SOUPAPE

(30) Priorität: 06.08.1994 DE 4427905
(43) Veröffentlichungstag der Anmeldung: 21.05.1997
(73) Patentinhaber: Continental Teves AG & Co. oHG, 60488 Frankfurt (DE)
(72) Erfinder: ZAVISKA, Dalibor, D-65760 Eschborn/Ts. (DE); LINHOFF, Paul, D-64859 Eppertshausen (DE)
(86) Internationale Anmeldenummer: EP9502946
(87) Internationale Veröffentlichungsnummer: WO9605090

(56) Entgegenhaltungen:
- EP-A- 0 065 451
- EP-A- 0 423 755
- EP-A- 0 434 092
- EP-A- 0 452 173
- EP-B- 0 353 635
- WO-A-91/18774
- WO-A-92/18362
- DE-A- 4 312 414
- PATENT ABSTRACTS OF JAPAN vol. 15 no. 407 (M-1169) ,17.Oktober 1991 & JP,A,03 168484 (TOYOTA AUTOM LOOM WORKS) 22.Juli 1991,

## Beschreibung

Die Erfindung betrifft eine Ventilvorrichtung, insbesondere für hydraulisch Bremsanlagen mit Blockier- und/oder Antriebsschlupfregelung nach dem Oberbegriff des Patentanspruchs 1, und ein Verfahren zur Einstellung der Ventilvorrichtung.

Eine Ventilvorrichtung gemäß der EP 0 353 635 B1 weist ein Ventilgehäuse auf, in das ein Kolben in der Funktion eines Stromregelventils eingesetzt ist, das in Abhängigkeit von der Schaltstellung eines elektromagnetischen Betätigungsgliedes den Volumenstrom zwischen einer Druckmittelquelle und einem Druckmittelverbraucher regelt. Zur Erfüllung dieser Funktion, verfügt der Kolben über einen relativ langen Schaft, dessen Durchgangsbohrungen mit Steuerkanten versehen sind, die radial in das Ventilgehäuse einmündenden Druckmittelkanäle des Druckmittelverbrauchers bzw. der Druckmittelquelle in gewünschter Weise übersteuern. Nicht nur die verhältnismäßig große Länge des Stromregelventils, sondern auch die Ansteuerung des Stromreglers mittels Ablassen von Druckmittel nach Öffnen der elektromagnetisch gesteuerten Druckmittelverbindung zu einem Vorratsbehälter führen zu einem erheblichen Bauvolumen der Ventilvorrichtung.

Aus der gattungsbildenden EP-A-0 065 451 geht zur Regelung des Volumenstroms zwischen einer Druckmittelquelle und einem Druckmittelverbraucher ein von einem Betätigungsglied beaufschlagter Kolben hervor, der zur Unterbrechung einer zum Druckmittelverbraucher führenden Druckmittelverbindung mit einem Sitzventilschließkörper versehen ist. Eine für die Stromregelfunktion notwendige Meßblende befindet sich außerhalb des Kolbens in einer Kanalabzweigung der Druckmittelquelle. Eine Druckmittelverbindung zwischen dem Druckmittelverbraucher und der Druckmittelquelle besteht über die Meßblende ausschließlich nach Freigabe einer Mittenbohrung im Kolben durch ein Kugelelement am Betätigungsglied.

In der JP-A-3 168 484 übernimmt zwar die Stirnkante an einem als Stromregelventil ausgebildeten Kolben die Druckmittelsteuerung zwischen einem Druckmittelverbraucher und einer Druckmittelquelle. Soweit aber die Druckmittelverbindung zwischen dem Druckmittelverbraucher und der Druckmittelquelle über die im Kolben eingebrachten Meßblenden erfolgt, ist der Druckmittelstrom und damit die Menge auch außerhalb der Stromregelfunktion in der Regel vom Kalibriermaß der Meßblenden abhängig.

Daher ist es die Aufgabe der Erfindung, eine Ventilvorrichtung der eingangs genannten Gattung dahingehend zu verbessern, daß unter Verwendung einfacher Mittel ein funktionssicherer Betrieb gewährleistet ist und das Bauvolumen auf ein Minimum reduziert ist.

Diese Aufgabe wird erfindungsgemäß durch die kennzeichnenden Merkmale des Patentanspruchs 1 gelöst.

In einer Einzelheit der Erfindung gemäß den Merkmalen des Patentanspruchs 2 wird vorgeschlagen, daß der Kolben des Stromregelventils zwischen dem Betätigungsglied und der an einem Halteteil der Ventilvorrichtung sich abstützenden Druckfeder angeordnet ist. Hierdurch kann die für das Stromregelventil erforderliche Stufenbohrung relativ kurz gewählt werden und es wird erreicht, daß der Kolben des Stromregelventils direkt vom Betätigungsglied kontaktiert ist.

Die weitere Ausgestaltung der Erfindung nach Anspruch 3 sieht vor, daß der Kolben mittels mehrerer an seinem Umfang angeordneter Ringnuten metallisch gedichtet im Ventilgehäuse axial beweglich geführt ist, so daß die Ringnuten die Funktion von Labyrinthdichtungen übernehmen, womit nur vernachlässigbar kleine Leckageströme entlang der Außenkontur des Kolbens entstehen können und die Kolbenlänge erheblich verkürzt werden kann.

Eine fertigungstechnisch besonders günstige Ausbildung der zwischen dem Stromregelventil und dem Ventilgehäuse notwendigen Steuerkantenfunktion zur Druckregelung ergibt sich unter Bezug auf Anspruch 4, wenn das Ventilgehäuse eine Stufenbohrung aufweist, die sowohl Vorteile für die Druckregelung wie auch Vorteile für die Anordnung des Betätigungsgliedes und der Druckfeder mit sich bringt.

Hinsichtlich des zuvor erwähnten Vorteils einer günstigen Druckmittelströmung, schlägt Patentanspruch 5 vor, daß der Kolben auf Höhe der Bohrungsstufe wenigstens eine Steuerkante aufweist, um in der Grundstellung des Betätigungsgliedes einen ungehinderten Druckmitteldurchlaß zwischen der Druckmittelquelle und dem Druckmittelverbraucher sicherzustellen.

Durch die Gestaltung des Kolbens in Form eines Topfes, ergibt sich die Möglichkeit entweder das Betätigungsglied möglichst tief in das Stromregelventil einzuführen, oder alternativ dazu die Druckfeder darin abzustützen, womit die Merkmale des Anspruchs 6 eine extreme Baulängenreduzierung bewirken.

Eine sinnvolle Maßnahme zur Einstellung des Betätigungsgliedes in der Stufenbohrung geht aus dem Patentanspruch 7 hervor, wozu in die Stufenbohrung ein Distanzstück eingesetzt wird.

Durch die Merkmale des Patentanspruchs 8 ergeben sich funktions- wie auch fertigungstechnische Vorteile, die im nachfolgenden detailliert aus dem Beschreibungsteil für verschiedene Ausführungsformen der Erfindung hervorgehen.

### Es zeigen:

- Figur 1: eine erste Ausführungsform einer Ventilvorrichtung im Profilschnitt,
- Figur 2: eine vergrößerte Teilansicht einer weiteren Ausführungsform des Erfindungsgegenstandes,
- Figur 3: eine bauliche Umkehrung und Betätigung der erfindungswesentlichen Merkmale für eine Ventilvorrichtung, mit im Vergleich zu den vorangegangenen Figuren umgekehrten Anschlüssen der Druckmittelquelle und des Druckmittelverbrauchers,
- Figur 4: eine Modifizierung der aus Figur 1 bekannten Ventilvorrichtung
- Figuren 5 und 6: Einzelheiten zur Einstellung der Ventilvorrichtung

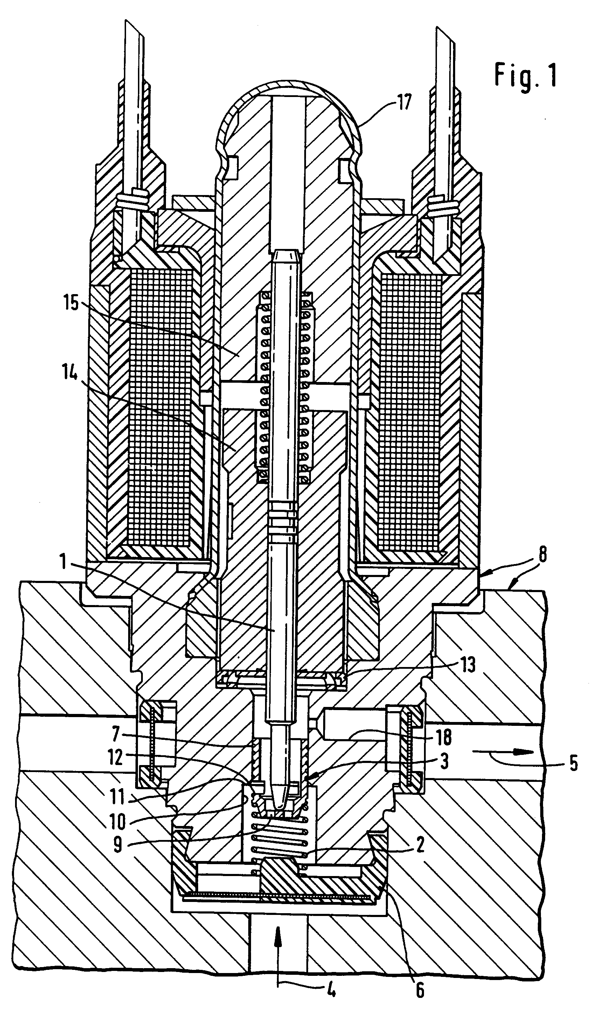

Die Figur 1 zeigt eine Ventilvorrichtung im Querschnitt mit einem Betätigungsglied 1, das Bestandteil eines Magnetankers 14 ist und mit einem oberhalb des Magnetankers 14 angeordneten Magnetkern 15, der von einer Hülse 17 eingefaßt ist, die in ihrem unteren Bereich im Ventilgehäuse 8 mittels einer Verstemmung die vorbeschriebenen Teile aufnimmt. Weiterhin befindet sich im unteren Bereich des Ventilgehäuses ein Kolben 3, der die Funktion des Stromregelventils übernimmt, eine sich am Kolben 3 abstützende Druckfeder 2, die sich mit dem vom Kolben 3 abgewandten Federende an einem Halteteil 6 anlegt. Das Betätigungsglied 1 erstreckt sich bis in die innenliegende Stirnfläche des Kolbens 3, der die Form eines Topfes aufweist. Das Betätigungsglied 1 und der Kolben 3 sind zueinander koaxial in einer Stufenbohrung 10 ausgerichtet, wobei die Bohrungsstufe 11 einen freien Druckmitteldurchlaß zwischen einer Druckmittelquelle 4 und einem Druckmittelverbraucher 5 herstellt, wenn gemäß der Abbildung das Betätigungsglied 1 unter Wirkung einer zwischen dem Magnetanker 14 und dem Magnetkern 15 eingespannten Druckfeder die Stirnfläche des Magnetankers 14 an einem in der Stufenbohrung 10 positionierten Distanzstück 13 anliegt. Der Kolben 3 des Stromregelventils weist hierzu eine radial die Kolbenwand durchdringende Öffnung auf, deren Steuerkante 12 einen für den ungehinderten Druckmittelstrom notwendigen Querschnitt freigibt. Unterhalb der Steuerkante 12 befinden sich in der Stirnfläche des Kolbens 3 Meßblenden 9, die gleichfalls durchströmt werden. Die von der Anlagefläche des Betätigungsgliedes 1 am Kolben 3 entfernt gelegene zweite Stirnfläche (Ringfläche)übernimmt gleichfalls die Funktion einer Steuerkante, die bei elektromagnetisch erregtem Magnetanker 14 die den zum Druckmittelverbraucher 5 hin angeschlossenen Querkanal 18 im Ventilgehäuse 8 je nach Betriebszustand überdeckt. Wie aus der Abbildung ersichtlich, dient als Halteteil 6 für die Druckfeder 2 ein Plattenfilterelement, jedoch kann bei Wunsch oder Bedarf das Halteteil 6 separat vom Plattenfilterelement im Stirnflächenbereich des Ventilgehäuses 8 form- und/oder kraftschlüssig befestigt werden. Das Ventilgehäuse 8 untergliedert sich in zwei Abschnitte, wobei der äußere Abschnitt des Ventilgehäuses 8 Bestandteil eines Ventilblockes ist, während der innere Abschnitt des Ventilgehäuses 8 als Ventilpatrone gestaltet mittels einer Selbstverstemmung im blockförmigen Gehäuse gehalten ist. Auf der außen überstehenden Stirnfläche der Ventilpatrone befindet sich zur elektromagnetischen Erregung eine Spule.

Im nachfolgenden wird die Funktionsweise der Ventilvorrichtung bei Verwendung für eine blockiergeschützte Bremsanlage beschrieben.

In der abbildungsgemäßen Grundstellung des Magnetankers 14 drückt die zwischen dem Magnetkern 15 und dem Magnetanker 14 eingespannte Druckfeder das Betätigungsglied 1 auf den Kolben 3, so daß ein ungehinderter Durchlaß zwischen der Druckmittelquelle (Hauptbremszylinder) und dem Druckmittelverbraucher 5 (Radbremse) über die offenen Querschnitte am Kolben 3 und über den oberhalb des Kolbens 3 freigegebenen Querkanal 18 zustande kommt. Die oberhalb des Magnetankers 14 angeordnete Druckfeder ist dabei in Abhängigkeit von der Kraft der Druckfeder 2 derart bemessen, daß beim Druckanstieg der Druckmittelquelle 4 (Betätigung des Hauptbremszylinders) der Kolben 3 nicht den zum Druckmittelverbraucher 5 führenden Querkanal 18 verschließt. Erst durch elektromagnetische Erregung des Magnetankers 14 bewegt sich das Betätigungsglied 1 in Richtung des Magnetkerns 15, so daß unter Wirkung der Druckfeder 2 sich der Kolben 3 nach oben bewegt und mit seiner Mantelfläche den zum Druckmittelverbraucher 5 führenden Querkanal 18 überdeckt. Gleichzeitig befindet sich die Steuerkante 12 des Kolbens 3 in Überdeckung mit der Bohrungsstufe 11, so daß Druckmittel ausschließlich über die Meßblende 9 bis in den Innenraum des Kolbens 3 gelangen kann. Das Stromregelventil befindet sich somit in Schließstellung. Zum Öffnen des Stromregelventils wird die Erregung des Magnetankers 14 unterbrochen, so daß die zwischen dem Magnetanker 14 und dem Magnetkern 15 eingespannte Druckfeder den Kolben 3 abwärts bewegt, womit der Querkanal 18 zur Volumenstromregelung freigegeben wird. Von der Druckmittelquelle 4 nachströmendes Fluid gelangt ausschließlich über die Meßblende 9 zum Querkanal 18 und damit zum Druckmittelverbraucher 3. Der Kolben 3 bewegt sich somit in eine den Volumenstrom regelnde Stellung, in der die Steuerkante 12 die Bohrungsstufe 11 überdeckt. Damit befindet sich der Kolben 3 in einer Stellung, in der die aus den beiden Druckfedern resultierende Federkraft in Abhängigkeit von der Querschnittsfläche des Kolbens im Gleichgewicht steht mit der an der Meßblende 9 eingestellten Druckdifferenz. Im vorliegenden Anwendungsfall für eine blockiergeschützte Bremsanlage ist die vorbeschriebene Stromregelfunktion oberhalb eines hydraulischen Drucks von ca. 5 bar wirksam. Diese Stromregelfunktion hat den Vorteil, daß sich unabhängig von Druckdifferenzen zwischen der Druckmittelquelle 4 und dem Druckmittelverbraucher 5 ein konstanter Druckaufbaugrandient ergibt, der unabhängig ist vom jeweiligen über dem Ansprechdruck des Stromregelventils liegenden Vordruck der Druckmittelquelle 4. Durch die wegabhängige Steuerung des Druckmittelvolumens mittels des Kolbens 3 sind Druckstöße bei einer Druckänderung während Druckaufbau-, Druckabbau- und Druckkonstanthaltephasen einer blockiergeschützten Bremsanlage sehr gering. Die Durchlaßquerschnitte zwischen Druckmittelquelle 4 und Druckmittelverbraucher 5 lassen sich derart bemessen, daß bei elektromagnetisch nicht erregtem Betätigungsglied 1 der gewünschte maximale Druckaufbaugradient erreicht wird, während kleinere Druckgradienten durch elektromagnetisches Pulsen des Betätigungsgliedes 1 eingestellt werden können.

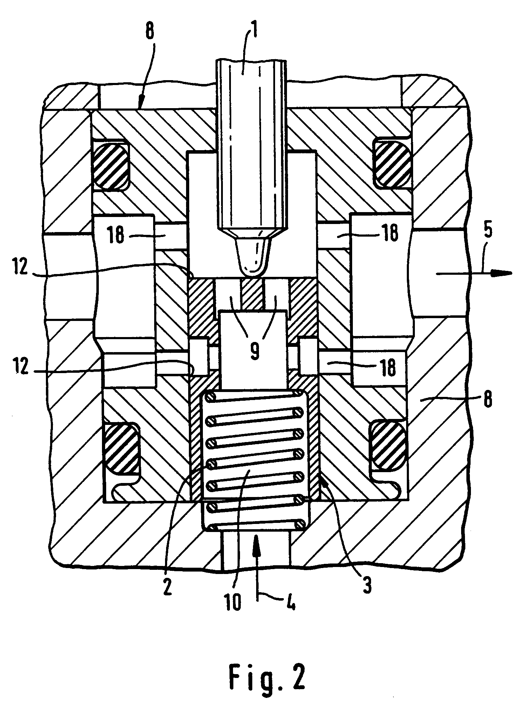

Die nachfolgenden Figuren 2 bis 6 zeigen Varianten zur vorgeschlagenen Ausführungsform nach Figur 1, wobei bei den nachfolgenden Erläuterungen ausschließlich auf die Veränderungen in den Figuren 2 bis 6 gegenüber Figur 1 eingegangen wird.

Die Figur 2 zeigt einen vergrößerten Ausschnitt einer Ventilvorrichtung in Anlehnung an Figur 1 mit dem Unterschied, daß die Druckmittelverbindung zwischen der Druckmittelquelle 4 und dem Druckmittelverbraucher 5 über zwei parallele Querkanäle 18 im Ventilgehäuse 8 erfolgt, wodurch sich strömungstechnisch ein geringerer Widerstand in der Grundstellung der Ventilvorrichtugn ergibt. Im Gegensatz zur Figur 1 kommt das Betätigungsglied 1 an der Außenseite der Stirnfläche des Kolbens 3 zur Anlage, während die Druckfeder 2 durch die vorgeschlagene Topfform des Kolbens 3 in dessen Innenraum geführt und abgestützt ist. Der Kolben 3 ist somit im Vergleich zu Figur 1 in umgekehrter Richtung in der Stufenbohrung angeordnet. Die dem Betätigungsglied 1 zugewandte Stirnfläche des Kolbens 3 sowie quer im Kolbenschaft verlaufende Bohrungen bilden die Steuerkanten 12.

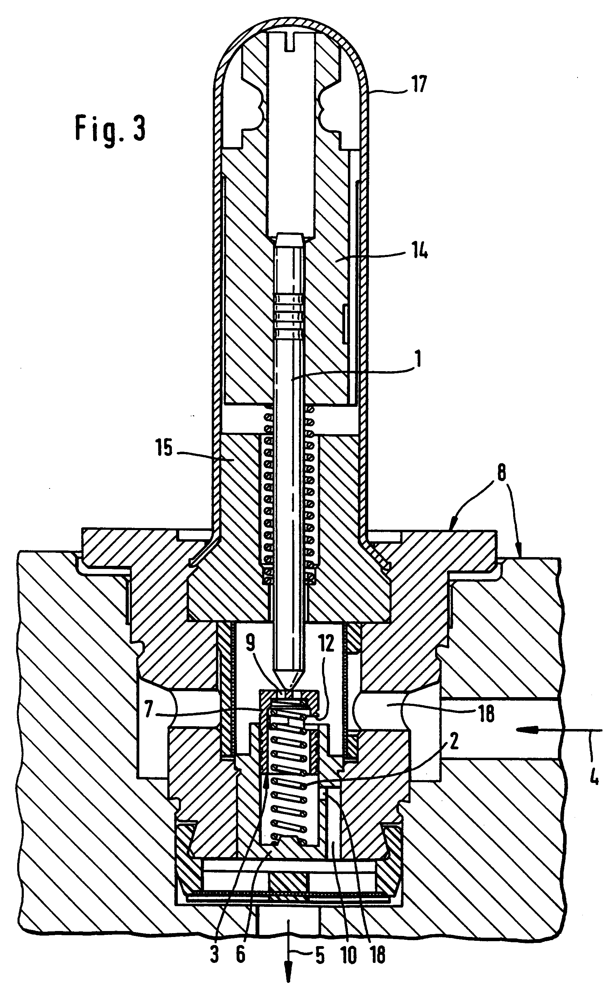

Die Figur 3 zeigt im Vergleich zu Figur 1 ein Ventilgehäuse 8 mit entgegengesetzter Durchströmungsrichtung, so daß zur Erfüllung der Stromregelfunktion auch gleichfalls der Kolben 3 in umgekehrter Richtung in das Ventilgehäuse 8 eingesetzt ist. Bezüglich der Einzelheiten zur Gestaltung des Kolbens 3 wird im weiteren auf Figur 1 verwiesen, wobei die Druckfeder 2 innerhalb des topfförmigen Kolbens 3 abgestützt ist und mit seinem entgegengelegenen Ende an einem Halteteil 6 anliegt, das vorzugsweise mittels einer Selbstverstemmstelle im Ventilgehäuse 8 befestigt ist. Das Betätigungsglied 1 kontaktiert somit die außengelegene Stirnfläche am Kolben 3. Der Magnetkern 15 ist nunmehr Bestandteil des Ventilgehäuses 8, während der Magnetanker 14 außerhalb des Ventilgehäuses 8 in der Hülse 17 geführt ist. Eine zwischen dem Magnetkern 15 und dem Magnetanker 14 eingespannte Druckfeder sorgt somit in der elektromagnetisch unerregten Stellung des Betätigungsgliedes 1 für den freien Druckmitteldurchlaß zwischen Druckmittelquelle 4 und Druckmittelverbraucher 5. Bei elektromagnetischer Erregung des Magnetankers 14 trennt der Kolben 3 die Hydraulikverbindung zwischen der Druckmittelquelle 4 und dem Druckmittelverbraucher 5, wobei die Volumenstromregelung des Kolbens 3 unabhängig von der zwischen dem Magnetkern 15 und dem Magnetanker 14 eingespannten Druckfeder über die Meßblenden 9 im Kolben 3 und dem Querkanal 18 im Halteteil 6 in Richtung des Druckmittelverbrauchers 5 erfolgt.

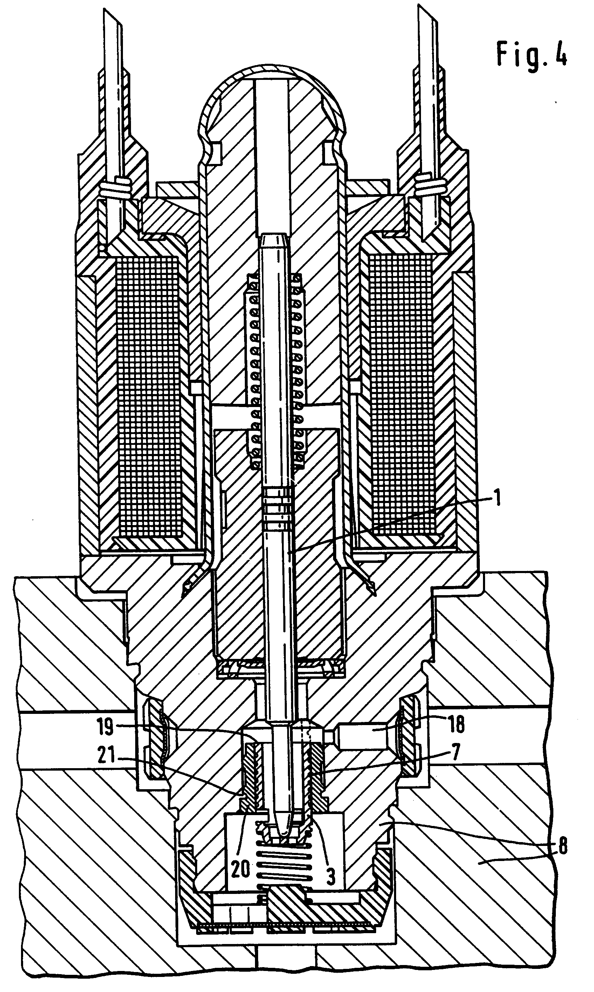

Die Figur 4 zeigt abweichend von Figur 1 die Stufenbohrung 10 im Bereich oberhalb des topfförmigen Kolbens 3 kegelförmig verjüngt ausgeformt. Damit gelangt der Rand des Kolbens 3 bei elektromagnetischer Betätigung des Magnetankers 14 als Dichtfläche 19 in Kontakt mit der kegelförmigen Verjüngung der Stufenbohrung 10, so daß nicht nur durch die als Labyrinthdichtung wirksamen Ringnuten 7 eine Abdichtung zwischen dem unterhalb des Kolbens 3 gelegenen Druckraums und dem Querkanal 18 gegeben ist, sondern auch der oberhalb des Kolbens 3 gelegene Druckraum sicher gegenüber dem Querkanal 18 verschlossen ist. Der Kolben 3 ist in einer auf Höhe des Querkanals 18 abgesetzten Buchse 20 geführt, die mittels einer Verstemmung 21 im Ventilgehäuse 8 befestigt ist. Die Figur 4 zeigt den Kolben 3 sowohl in der deaktivierten Stellung des Betätigungsgliedes 1, wie auch in (andeutungsweise strichliniierter) elektromagnetisch erregter Betriebsbremsstellung, in der der Kolben 3 mit seiner Dichtfläche 19 die kegelförmige Verjüngung der Stufenbohrung 10 kontaktiert.

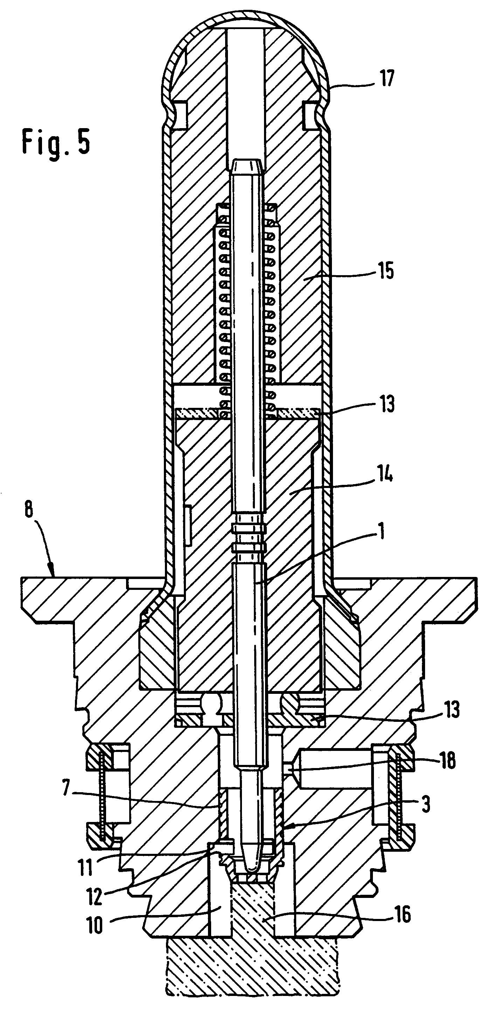

Die Figur 5 zeigt für die Einstellung der Ventilbaugruppe notwendigen Einzelheiten, wonach zur Einstellung des Betätigungshubs zunächst ein Distanzstück 13 zwischen den Magnetanker 14 und den Magnetkern 15 eingelegt und nach Überstülpen der Hülse 17 mit einer Kraft soweit in das Ventilgehäuse 8 eingedrückt wird, bis sich das zwischen dem Magnetanker 14 und dem Ventilgehäuse 8 eingefügte scheibenförmige Distanzstück 13 auf das gewünschte Maß plastisch verformt hat. Das Betätigungsglied 1 wird gleichzeitig durch ein von unten in die Stufenbohrung 10 des Ventilgehäuses 8 eingeführtes Einstellwerkzeug 16 in die gewünschte Position gebracht. Danach wird das zwischen dem Magnetanker 14 und dem Magnetkern 15 gelegene Distanzstück 13 entfernt und nach erneutem Aufsetzen der Hülse 17 auf vorbeschriebene Teile diese im Ventilgehäuse 8 verstemmt.

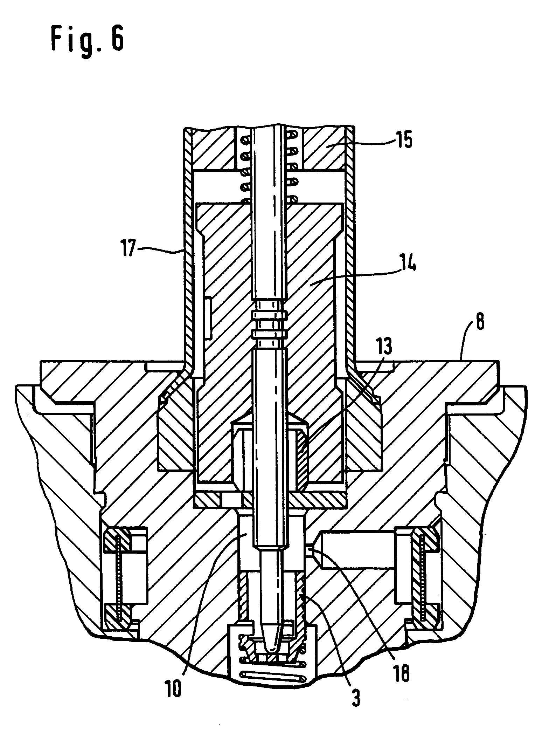

Die Figur 6 zeigt abweichend gegenüber Figur 5 die Hubeinstellung des Betätigungsgliedes 1 mittels eines als Spannhülse ausgeführten Distanzstücks 13, das reibschlüssig im Magnetanker 14 angeordnet ist und sich auf der entgegenliegenden Seite des Ventilgehäuses 8 in der Stufenbohrung 10 abstützt.

Zu den in Figur 5 und 6 beschriebenen Einstellhilfen sind hinsichtlich der Ausbildung des Distanzstückes 13 und des Einstellwerkzeuges 16 Varianten möglich, die jedoch bezüglich der grundsätzliche Anordnung und Maßnahme zur Einstellung des Betätigungsgliedes 1 bzw. des Kolbens 3 nicht über das Wesen der Erfindung hinausgehen. Weitere Ausführungsformen sind somit denkbar jedoch hinsichtlich einer Darstellung nicht zwingend erforderlich.

### Bezugszeichenliste

- 1: Betätigungsglied
- 2: Druckfeder
- 3: Kolben
- 4: Druckmittelquelle
- 5: Druckmittelverbraucher
- 6: Halteteil
- 7: Ringnut
- 8: Ventilgehäuse
- 9: Meßblende
- 10: Stufenbohrung
- 11: Bohrungsstufe
- 12: Steuerkante
- 13: Distanzstück
- 14: Magnetanker
- 15: Magnetkern
- 16: Einstellwerkzeug
- 17: Hülse
- 18: Querkanal
- 19: Dichtfläche
- 20: Buchse

## Patentansprüche

1. Ventilvorrichtung, insbesondere für hydraulische Bremsanlagen mit Blockier- und/oder Antriebsschlupfregelung, mit einem Ventilgehäuse (8), das ein Stromregelventil aufweist, mit einem elektromagnetischen Betätigungsglied (1), das baulich in Reihe zum Stromregelventil im Ventilgehäuse (8) angeordnet ist, mit einem das Stromregelventil bildenden Kolben (3), der in seiner Grundstellung eine ungehinderte Druckmittelverbindung zwischen einer Druckmittelquelle (4) und einem Druckmittelverbraucher (5) herstellt, wobei sich das Betätigungsglied (1) in seiner Grundstellung entgegen der Wirkung einer Druckfeder (2) an einer Stirnfläche des Kolbens (3) abstützt, und wobei sich in der Betriebsstellung des Betätigungsgliedes (1) der Kolben (3) vom Betätigungsglied (1) zu lösen vermag und eine den Druckmittelvolumenstrom zwischen der Druckmittelquelle (4) und dem Druckmittelverbraucher (5) regelnde Zwischenstellung einnimmt, wobei die vom Betätigungsglied kontaktierte Stirnfläche des Kolbens (3) wenigstens eine Meßblende (9) aufweist, die in der Grundstellung des Betätigungsgliedes (1) durchströmt ist, dadurch **gekennzeichnet**, daß der Kolben (3) eine radial die Kolbenwand durchdringende Öffnung aufweist, deren Steuerkante (12) einen für den ungehinderten Druckmittelstrom notwendigen Quer-schnitt aufweist.

2. Ventilvorrichtung nach Anspruch 1, dadurch **gekennzeichnet**, daß der Kolben (3) zwischen dem Betätigungsglied (1) und der im Ventilgehäuse (8) an einem Halteteil (6) sich abstützenden Druckfeder (2) angeordnet ist.

3. Ventilvorrichtung nach Anspruch 1 oder 2, dadurch **gekennzeichnet**, daß der Kolben (3) mittels mehrerer an seinem Umfang angeordneter Ringnuten (7) metallisch gedichtet im Ventilgehäuse (8) axial beweglich geführt ist.

4. Ventilvorrichtung nach einem der vorhergehenden Ansprüche, dadurch **gekennzeichnet**, daß das Ventilgehäuse (8) zur Aufnahme des Betätigungsgliedes (1), des Kolbens (3) und der Druckfeder (2) eine Stufenbohrung (10) auf weist.

5. Ventilvorrichtung nach Anspruch 1, dadurch **gekennzeichnet**, daß der Kolben (3) auf Höhe einer Bohrungsstufe (11) wenigstens eine Steuerkante (12) aufweist.

6. Ventilvorrichtung nach mindestens einem der vorhergehenden Ansprüche 1 bis 5, dadurch **gekennzeichnet**, daß der Kolben (3) im wesentlichen topfförmig gestaltet ist, an dem sich die Druckfeder (2) und das Betätigungsglied (1) abstützt.

7. Ventilvorrichtung nach Anspruch 4, dadurch **gekennzeichnet**, daß die Stufenbohrung (10) ein Distanzstück (13) aufnimmt, das das Betätigungsglied (1) justiert.

8. Ventilvorrichtung nach Anspruch 7, dadurch **gekennzeichnet**, daß alle in der Stufenbohrung (10) angeordneten Teile (1,2,3,13) zueinander koaxial ausgerichtet sind.

9. Ventilvorrichtung nach Anspruch 1, dadurch **gekennzeichnet**, daß der Kolben (3) im Bereich seiner Stirnfläche eine Dichtfläche (19) aufweist, die am Ventilgehäuse (8) anlegbar ist, um die Druckmittelverbindung zwischen der Druckmittelquelle(4) und dem Druckmittelverbraucher (5) zu trennen.

10. Verfahren zur Einstellung einer Ventilvorrichtung, insbesondere für hydraulische Bremsanlagen mit Blockier- und/oder Antriebsschlupfregelung, mit einem Ventilgehäuse (8), in das ein Stromregelventil eingesetzt wird, mit einem elektromagnetischen Betätigungsglied (1), das baulich in Reihe zum Stromregelventil angeordnet wird, mit einem das Stromregelventil bildenden Kolben (3), der in seiner Grundstellung eine ungehinderte Druckmittelverbindung zwischen einer Druckmittelquelle (4) und einem Druckmittelverbraucher (5) herstellt, nach einem der vorhergehenden Ansprüche 1 bis 9, dadurch **gekennzeichnet**, daß zur Einstellung des für das Stromregelventil notwendigen Öffnungshubs am Betätigungsglied (1) zwischen einem Magnetanker (14) und einem Magnetkern (15) sowie zwischen dem Magnetanker (14) und der Stufenbohrung (10) Distanzstücke (13) eingelegt werden, daß das Betätigungsglied (1), die Distanzstücke (13), der Magnetanker (14) und der Magnetankern (15) in die Stufenbohrung (10) soweit eingefügt werden, bis sich ein zwischen dem Magnetanker (14) und dem Magnetkern (15) sowie zwischen dem Magnetanker (14) und der Stufenbohrung (10) durch die Distanzstücke (13) eine vorbestimmte Einstelltiefe im Ventilgehäuse (8) ergibt, daß auf der vom Betätigungsglied (1) entgegengelegenen Seite des Kolbens (3) in die Stufenbohrung (10) ein Einstellwerkzeug (16) eingeführt wird, das den für das Stromregelventil notwenigen Schließhub am Betätigungsglied (1) einstellt, und daß nach Entfernen des zwischen dem Magnetanker (14) und dem Magnetkern (15) an geordneten Distanzstückes (13) eine Hülse (17) über die genannten Teile (1,14,15) gestülpt und im Ventilgehäuse befestigt wird.

11. Verfahren nach Anspruch 10, dadurch **gekennzeichnet**, daß das zwischen dem Magnetanker (14) und der Stufenbohrung (10) eingelegte Distanzstück (13) plastisch verformt wird.

12. Verfahren nach Anspruch 10, dadurch **gekennzeichnet**, daß das zwischen dem Magnetanker (14) und der Stufenbohrung (10) befindliche Distanzstück (13) vorzugsweise als reibschlüssiges Ringteil in den Magnetanker (14) eingepreßt wird.

## Claims

1. Valve unit, in particular, for hydraulic brake systems with antilock and/or traction slip control, comprising a valve housing (8) with a flow control valve, an electromagnetic actuating element (1) that is structurally arranged in series with the flow control valve in the valve housing (8), and a piston (3) that forms the flow control valve and produces an unobstructed pressure medium connection between a pressure medium source (4) and a pressure medium consumer (5) in its normal position, wherein the actuating element (1) is supported on one end face of the piston (3) against the force of a compression spring (2) in its normal position, wherein the piston (3) is able to separate from the actuating element (1) and assume an intermediate position in which it controls the volume flow of the pressure medium between the pressure medium source (4) and the pressure medium consumer (5) in the operating position of the actuating element (1), and wherein the end face of the piston (3) which is contacted by the actuating element comprises at least one metering orifice (9), through which the pressure medium flows in the normal position of the actuating element (1), characterized in that the piston (3) is provided with an opening that penetrates radially through the piston wall, wherein the control edge (12) of said opening has the cross section required for realizing the unobstructed pressure medium flow.

2. Valve unit as claimed in Claim 1,
characterized in that the piston (3) is arranged between the actuating element (1) and the compression spring (2) that is supported on a holding part (6) in the valve housing (8).

3. Valve unit as claimed in Claim 1 or 2,
characterized in that the piston (3) is guided in the valve housing (8) in axially movable fashion and is metallically sealed by means of several annular grooves (7) arranged on its circumference.

4. Valve unit as claimed in one of the preceding claims, characterized in that the valve housing (8) comprises a stepped bore (10) for accommodating the actuating element (1), the piston (3) and the compression spring (2).

5. Valve unit according Claim 1,
characterized in that the piston (3) comprises at least one control edge (12) at the elevation of a bore step (11).

6. Valve unit as claimed in at least one of the preceding Claims 1-5,
characterized in that the piston (3) is essentially constructed in pot-shaped fashion, and that the compression spring (2) and the actuating element (1) are supported on the piston face.

7. Valve unit as claimed in Claim 4,
characterized in that the stepped bore (10) accommodates a spacer (13) for adjusting the actuating element (1).

8. Valve unit according Claim 7,
characterized in that all components (1, 2, 3, 13) that are arranged in the stepped bore (10) are aligned coaxially.

9. Valve unit as claimed in Claim 1,
characterized in that the piston (3) comprises a sealing surface (19) within the region of its end face which is movable into abutment with the valve housing (8) in order to interrupt the pressure medium connection between the pressure medium source (4) and the pressure medium consumer (5).

10. Method of adjusting a valve unit, in particular, for hydraulic brake systems with antilock and/or traction slip control, comprising a valve housing (8), into which a flow control valve is inserted, an electromagnetic actuating element (1) that is structurally arranged in series with the flow control valve, and a piston (3) that forms the flow control valve and produces an unobstructed pressure medium connection between a medium source (4) and a pressure medium consumer (5) in its normal position, as claimed in any one of the preceding Claims 1-9,
characterized in that spacers (13) are inserted between an armature (14) and a magnet core (15) as well as between the armature (14) and the stepped bore (10) in order to adjust the required opening stroke for the flow control valve on the actuating element (1), in that the actuating element (1), the spacers (13), the armature (14) and the magnet core (15) are inserted into the stepped bore (10) until a predetermined adjusting depth is attained in the valve housing (8) between the armature (14) and the magnet core (15) as well as between the armature (14) and the stepped bore (10) with the aid of the spacers (13), in that an adjusting tool (16) is inserted into the stepped bore (10) on the side of the piston (3) that is situated opposite to the actuating element (1), wherein said adjusting tool adjusts the required closing stroke for the flow control valve on the actuating element (1), and in that after removing the spacer (13) arranged between the armature (14) and the magnet core (15), a sleeve (17) is placed over the aforementioned components (1, 14, 15) and fastened in the valve housing.

11. Method as claimed in Claim 10,
characterized in that the spacer (13) that is inserted between the armature (14) and the stepped bore (10) is subjected to a plastic deformation.

12. Method as claimed in Claim 10,
characterized in that the spacer (13) which is interposed between the armature (14) and the stepped bore (10) is preferably pressed into the armature (14) as a frictionally engaged annular part.

## Revendications

1. Dispositif à vanne, en particulier pour des systèmes de freins hydrauliques équipés d'un système d'antiblocage et/ou d'antipatinage, comprenant un boîtier de vanne (8) muni d'une vanne de réglage du flux, un organe de manoeuvre (1) électromagnétique, qui est disposé structurellement en ligne avec la vanne de réglage du flux dans le boîtier de vanne (8), un piston (3) formant la vanne de réglage du flux qui, dans sa position de repos, laisse circuler sans obstacle un milieu sous pression entre une source de milieu sous pression (4) et un consommateur de milieu sous pression (5), dans lequel l'organe de manoeuvre (1) s'appuie dans sa position de repos, à l'encontre de la force exercée par un ressort de pression (2), sur une surface frontale du piston (3) et dans lequel, lorsque l'organe de manoeuvre (1) est en position de service, le piston (3) se détache de l'organe de manoeuvre (1) et se place dans une position intermédiaire assurant le réglage du débit de milieu sous pression entre la source de milieu sous pression (4) et le consommateur de milieu sous pression (5), dans lequel la surface frontale du piston (3) en contact avec l'organe de manoeuvre comporte au moins un orifice de mesure (9) qui est traversé par écoulement lorsque l'organe de manoeuvre est en position de repos, caractérisé en ce que le piston (3) comporte une ouverture qui traverse dans le sens radial la paroi du piston et dont le bord fonctionnel (12) présente une section nécessaire pour laisser passer sans obstacle le milieu sous pression.

2. Dispositif à vanne selon la revendication 1, caractérisé en ce que le piston (3) est disposé entre l'organe de manoeuvre (1) et le ressort de pression (2) s'appuyant contre une pièce de support (6) dans le boîtier de vanne (8).

3. Dispositif à vanne selon la revendication 1 ou 2, caractérisé en ce que le piston (3) est guidé dans le boîtier de vanne (8) dans un mouvement axial et rendu étanche métalliquement à l'aide de plusieurs rainures annulaires (7) réalisées sur sa périphérie.

4. Dispositif à vanne selon l'une quelconque des revendications précédentes, caractérisé en ce que le boîtier de vanne (8) est muni d'un alésage à gradins (10) pour recevoir l'organe de manoeuvre (1), le piston (3) et le ressort de pression (2).

5. Dispositif à vanne selon la revendication 1, caractérisé en ce que le piston (3) présente au moins un bord fonctionnel (12), au niveau d'un gradin de l'alésage (11).

6. Dispositif à vanne selon l'une quelconque des revendications précédentes 1 à 5, caractérisé en ce que le piston (3) est réalisé sensiblement en forme de pot contre lequel s'appuient le ressort de pression (2) et l'organe de manoeuvre (1).

7. Dispositif à vanne selon la revendication 4, caractérisé en ce que l'alésage à gradins (10) reçoit un dispositif d'écartement (13), qui permet d'ajuster l'organe de manoeuvre (1).

8. Dispositif à vanne selon la revendication 7, caractérisé en ce que toutes les pièces (1, 2, 3, 13) disposées dans l'alésage à gradins (10) sont orientées dans le sens coaxial l'une par rapport à l'autre.

9. Dispositif à vanne selon la revendication 1, caractérisé en ce que le piston (3) présente une surface d'étanchéité (19) dans la zone de sa surface frontale, qui peut entrer en contact avec le boîtier de vanne (8) afin d'interrompre la circulation de milieu sous pression entre la source de milieu sous pression (4) et le consommateur de milieu sous pression (5).

10. Procédé de réglage d'un dispositif à vanne, en particulier pour des systèmes de freins hydrauliques équipés d'un système d'antiblocage et/ou d'antipatinage, comprenant un boîtier de vanne (8), dans lequel est montée une vanne de réglage du flux, un organe de manoeuvre (1) électromagnétique, qui est disposé structurellement en ligne avec la vanne de réglage du flux, un piston (3) formant la vanne de réglage du flux qui, dans sa position de repos, laisse circuler sans obstacle le milieu sous pression entre une source de milieu sous pression (4) et un consommateur de milieu sous pression (5), selon l'une quelconque des revendications précédentes 1 à 9, caractérisé en ce que, pour régler la course d'ouverture nécessaire pour la vanne de réglage du flux, des dispositifs d'écartement (13) sont disposés sur l'organe de manoeuvre (1) entre une armature magnétique (14) et un noyau magnétique (15), ainsi qu'entre l'armature magnétique (14) et l'alésage à gradins (10), en ce que l'organe de manoeuvre (1), les dispositifs d'écartement (13), l'armature magnétique (14) et le noyau magnétique (15) sont insérés dans l'alésage à gradins (10) jusqu'à obtenir dans le boîtier de vanne (8) une profondeur de montage prédéterminée par les dispositifs d'écartement (13) entre l'armature magnétique (14) et le noyau magnétique (15) et entre l'armature magnétique (14) et l'alésage à gradins (10), en ce que, sur le côté du piston (3) opposé à l'organe de manoeuvre (1), on insère dans l'alésage à gradins (10) un outil de réglage (16) qui régle sur l'organe de manoeuvre (1) la course de fermeture nécessaire pour la vanne de réglage du flux, et en ce que, après avoir retiré le dispositif d'écartement monté entre l'armature magnétique (14) et le noyau magnétique (15), on emboutit par retournement une gaine (17) sur les pièces mentionnées (1, 14, 15) et on la fixe dans le boîtier de vanne.

11. Procédé selon la revendication 10, caractérisé en ce que le dispositif d'écartement disposé entre l'armature magnétique (14) et l'alésage à gradins (10) est soumis à un formage plastique.

12. Procédé selon la revendication 10, caractérisé en ce que le dispositif d'écartement disposé entre l'armature magnétique (14) et l'alésage à gradins (10) est emmanché dans l'armature magnétique (14) de préférence sous forme de pièce annulaire entraînée par friction.
